# EUROPEAN PATENT APPLICATION

(11) **EP 1 467 121 A2**
(43) Date of publication of application: **13.10.2004**
(21) Application number: 04251874.6
(22) Date of filing: 30.03.2004
(51) Int. Cl.: F16F 15/073, B64G 1/64

(54) **Shock attenuating mounting bracket**

(30) Priority: 31.03.2003 US 401954
(71) Applicant: COM DEV LTD., Cambridge, Ontario N1R 7H6 (CA)
(72) Inventor: Heinemann, Mark, Kitchener Ontario N2E 3L9 (CA); Voss, Eric Henry, Waterloo Ontario N2T 2L8 (CA)
(74) Representative: Loveless, Ian Mark

(57) **Abstract**

A shock attenuating mounting bracket (30) for isolating a hardware component from shocks associated with an underlying structure includes a base (32) and a planar strip (34) coupled together. The base (32) is coupled to the underlying structure and the planar strip (34) is coupled to the hardware component. The planar strip has at least two bends (36,38) along its length for dissipating the shocks associated with the underlying structure. The planar strip can be C-shaped with first and second free ends coupled to the base and a mid-section coupled to the hardware component. Alternatively, the planar strip can have a C-shaped notch formed within and the bracket can include a multi-sided gusset plate that braces the base to the planar strip. The bracket is designed to improve the shock attenuation in shock sensitive designs while maintaining sufficient structural stiffness to sustain random vibration loads and minimum natural frequencies greater than 100 Hz.

## Description

### FIELD OF THE INVENTION

This invention relates to shock attenuating equipment and more particularly to shock attenuating mounting brackets for use in a spacecraft.

### BACKGROUND OF THE INVENTION

Within the satellite communication industry, various types of shock load isolation methods are used to attenuate the shock transmitted from a supporting structure (e.g. a satellite floor/payload panel) to a piece of communication equipment hardware (e.g. a waveguide or filter). Shock loads are typically large magnitude, short duration disturbances having vibration energy between 100 Hz and 10000 Hz, can be of a transient or continuing nature, and have axial and lateral directional components. Accordingly, during the launch segment (including launch and on orbit deployment), substantial mechanical vibration and/or mechanical shocks from the satellite and launch vehicle must be prevented from reaching a mounted piece of communication equipment hardware. If sufficient shock load is provided to the communication equipment hardware, transmitted mechanical vibration and/or mechanical shocks can cause the communication equipment to fail. Commercial communication satellite manufacturers are imposing increasingly stringent shock response spectrum requirements that existing shock attenuation methods cannot achieve due to various inherent disadvantages and limitations.

One shock load isolation method involves the use of ductile materials at the interface (e.g. foam, gasket, rubber) between a supporting structure and a piece of communication equipment hardware. This method provides shock attenuation due to the high-energy absorptive properties of the materials used. However, when these materials are used, the natural frequency of the overall assembly is significantly reduced. Accordingly, coupling with the spacecraft natural frequency causes a superposition of the loading associated with random vibration which results in high deflections and high stresses on the overall assembly. This is unacceptable and satellite manufacturers have placed minimum natural frequency requirements in all component specifications.

Another way of isolating communication equipment hardware from shock sources is to move interface-mounting points away from the critical components and from the shock input source. This provides passive shock attenuation by locating the interface points far from the critical areas of the assembly such that the natural attenuation of the assembly materials themselves result in a lower shock input. However, the effectiveness of this method requires a high degree of layout flexibility. This level of layout flexibility cannot be practically accommodated within commercial satellites due to their limited available real estate.

Communication equipment hardware can also be isolated from shock sources by raising assemblies on structural support brackets and placing the raised assembly on honeycomb panels to provide additional shock attenuation. However, the use of honeycomb panels is space consuming and can only be used when mass is not critical making this approach undesirable. The use of honeycomb panels is not applicable to applications where the thermal dissipation of the assembly is high.

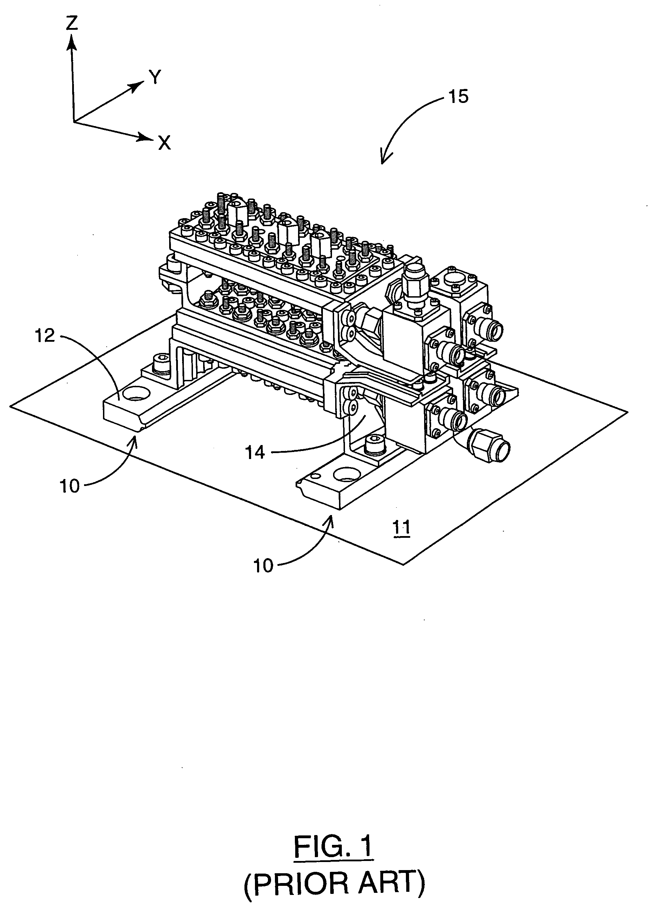

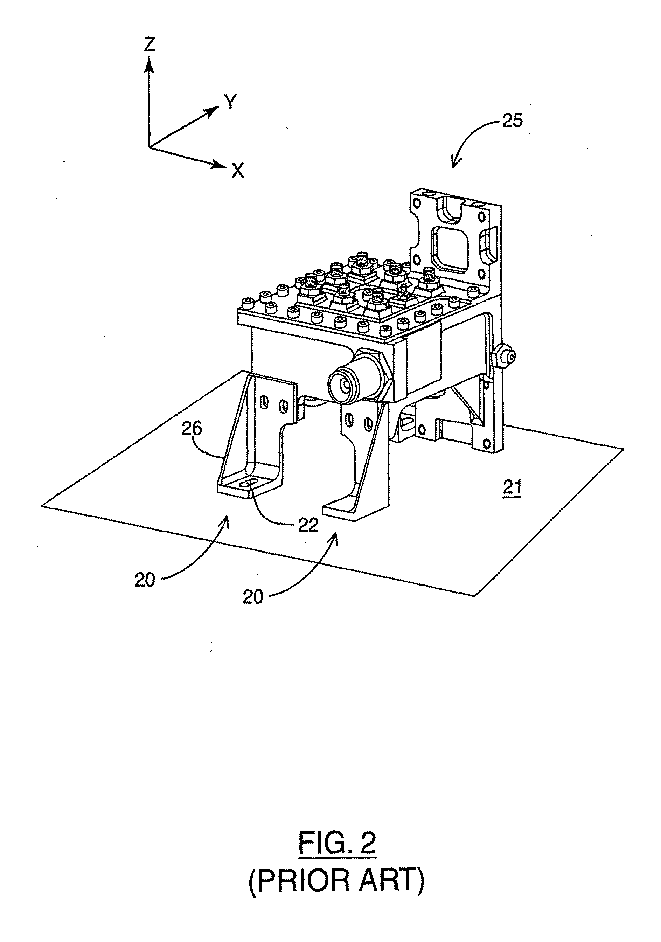

Finally, and most commonly, communication equipment hardware is isolated from shock sources by coupling the hardware to the satellite on shock attenuation brackets. Conventional shock attenuation brackets are either of a flexible or rigid design. FIG. 1 shows a typical flexible bracket 10 in use, coupled to a supporting surface 11 and supporting a Ku-Band input multiplexer component 15. As shown, conventional flexible bracket 10 has a horizontally-oriented configuration and includes a base 12 and a back wall 14. A flexibility of movement is provided between the base 12 and back wall 14. In contrast, a rigid bracket 20 is illustrated in FIG. 2. Rigid bracket 20 is shown in use, coupled to a supporting surface 21 and supporting a C-Band dielectric output multiplexer component 25. As shown, conventional rigid bracket 20 has a base 22, a back wall 24 and a side element (gusset) 26 connecting base 22 to the top of the back wall 24.

### SUMMARY OF THE INVENTION

The invention provides in one aspect, a shock attenuating mounting bracket for isolating a hardware component from shocks associated with an underlying structure, said bracket comprising:
(a) a base adapted to be coupled to the underlying structure; and
(b) a planar strip coupled to said base and being adapted to be coupled to said hardware component, said planar strip having at least two bends along its length for dissipating the shocks associated with the underlying structure.

Further aspects and advantages of the invention will appear from the following description taken together with the accompanying drawings.

### BRIEF DESCRIPTION OF THE DRAWINGS

In the accompanying drawings:
FIG. 1 is a side perspective view of a prior art shock attenuating bracket shown mounting communication hardware to a supporting surface;
FIG. 2 is a side perspective view of another prior art shock attenuating bracket mounting communication hardware to a supporting surface;
FIG. 3A is a side perspective view of one example of a shock attenuating support bracket made in accordance with the present invention;
FIG. 3B is a front cross-sectional view of the shock attenuating support bracket of FIG. 3A;
FIG. 3C is a side cross-sectional view of the shock attenuating support bracket of FIG. 3A;
FIG. 3D is a side perspective view of the shock attenuating support bracket of FIG. 3A in use with a Ku-Band input multiplexer;
FIG. 4A is a side perspective view of another example of a shock attenuating support bracket made in accordance with the present invention;
FIG. 4B is a side cross-sectional view of the shock attenuating support bracket of FIG. 3A; and
FIG. 4C is a side perspective view of the shock attenuating support bracket of FIG. 4A in use with a C-Band dielectric resonator output multiplexer.

### DETAILED DESCRIPTION OF THE INVENTION

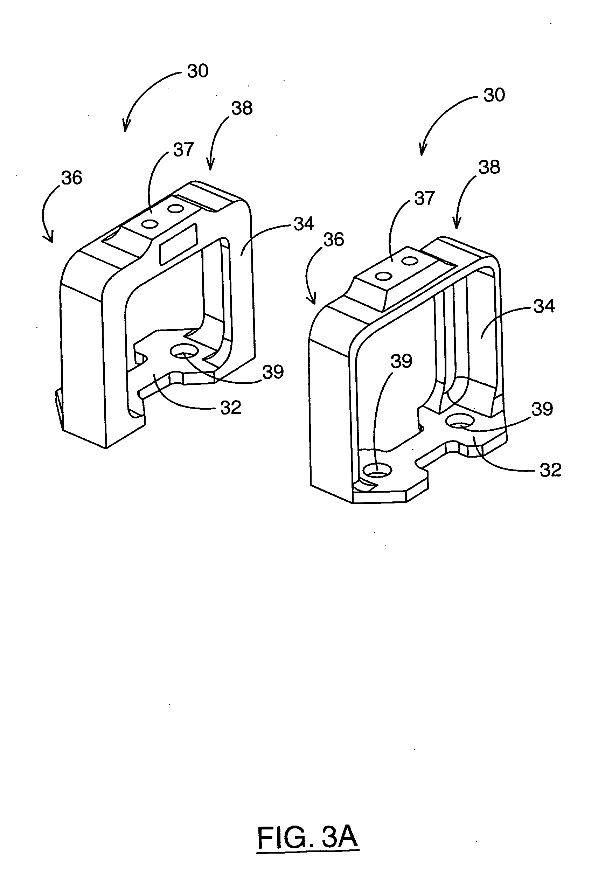

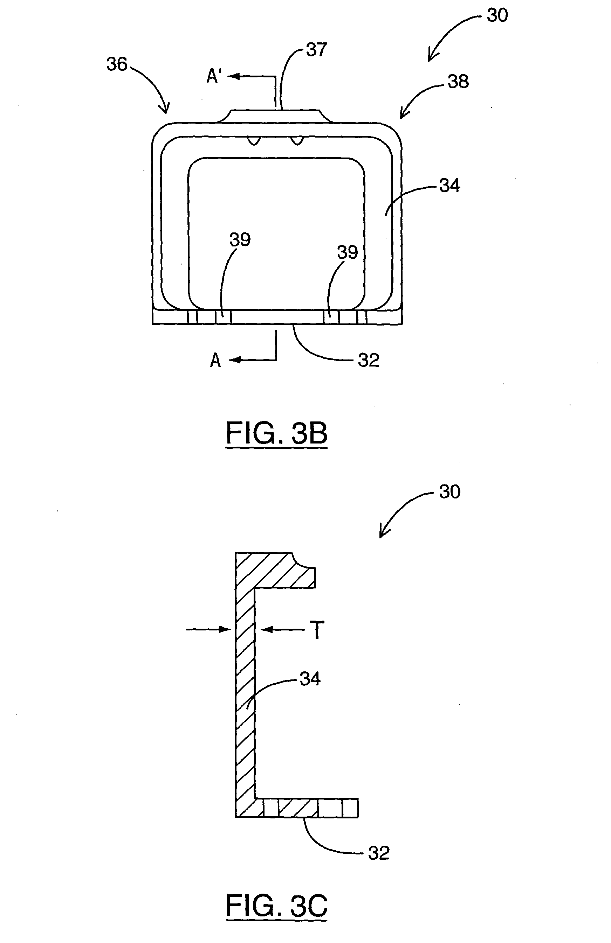

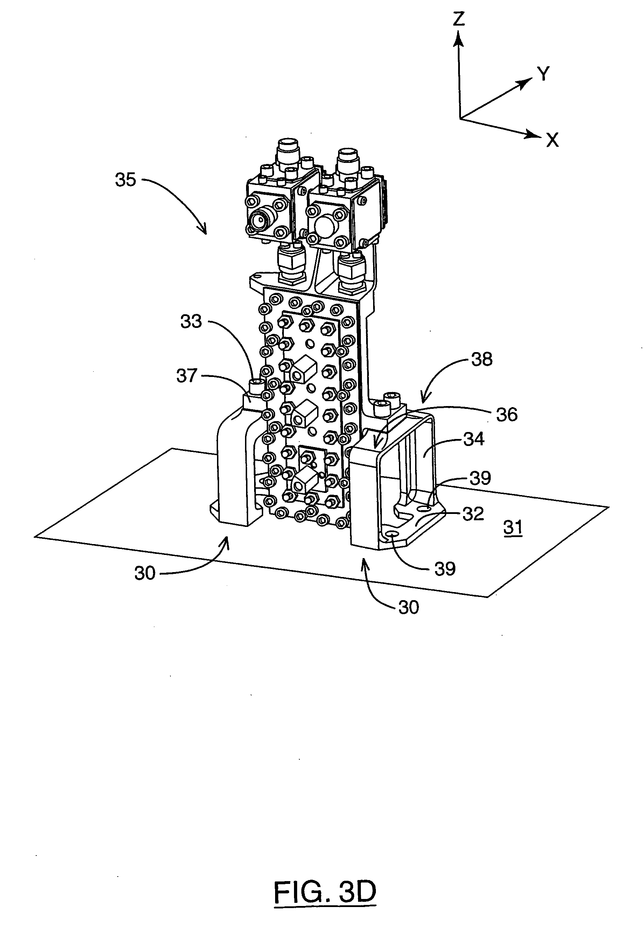

FIGS. 3A, 3B, 3C and 3D illustrate an example of a shock attenuating mounting bracket 30 built in accordance with the present invention. Specifically, a pair of mounting brackets 30 is shown, each including a base 32 and a C-shaped planar strip 34. A pair of brackets 30 is shown supporting a Ku-Band input multiplexer hardware component 35 in FIG. 3D. As will be described, the geometry of bracket 30 provides for shock pulse attenuation between base 32 and the portion of C-shaped planar strip 34 which contacts hardware component 35. That is, bracket 30 has been designed to act as a shock isolator, while also providing enough structural support to sustain random vibration loads.

Base 32 is used to secure bracket 30 to a supporting surface 31 as shown. Suitable means, such as screws (not shown) are provided to secure brackets 30 to supporting surface 31 through apertures 39. The outer edges of base 32 extend outward from the edge of C-shaped planar strip to provide additional stability to bracket 30. The cross-sectional thickness T (see FIG. 3C) of base 32 is sufficient to ensure that the minimum natural frequency of bracket 30 when coupled to Ku-Band input multiplexer hardware component 35 is greater than 100 Hz.

The ends of C-shaped planar strip 34 are machined to base 32 using conventional machining techniques. C-shaped planar strip 34 has two bends 36 and 38 and a bolted friction joint 37 to which hardware component 35 is coupled using suitable means such as the bolts 33 shown in FIG. 3C. The overall geometry of C-shaped planar strip 34 forces the shock pulse received through base 32 to change direction through the two bends 36 and 38 before crossing the bolted friction joint 37 into hardware component 35. While C-shaped planar strip 34 has been described as having two bends 34 and 36, it should be understood that it is contemplated that additional bends be introduced into the geometry of planar strip 34 to further redirect shock pulses deriving from supporting structure 31.

Base 32 and C-shaped planar strip 34 of bracket 30 are preferably manufactured from an aluminum alloy (7075 series alloy) and nickel-plated to provide corrosion protection and scratch resistance. However, it should be understood that the members of brackets 30 may be formed of any suitable materials (e.g. Al 6061-T6, Magnesium, Titanium).

In contrast to the conventional Ku-Band input multiplexer assembly brackets 10 shown in FIG. 1 which are horizontally-oriented, mounting brackets 30 are designed for mounting hardware components 35 in a vertically-oriented manner to minimize the physical footprint of each assembly. Mounting brackets 30 are designed to withstand a random vibration event while maintaining a relatively high assembly natural frequency. As discussed above, mounting bracket 30 derives its flexibility from the curved geometry of its C-shaped planar strip 34. Also, as discussed above, mounting bracket 30 has been designed to have an adequately thick cross section to ensure that the minimum natural frequency of bracket 30 when coupled to Ku-Band input multiplexer hardware component 35 is greater than 100 Hz. The geometry of bracket 30 forces a shock pulse from support structure 31 to change direction through the two bends 36 and 38 before crossing the bolted friction joint 37 and applying loading to the hardware component 35. It is this change in direction whereby energy is dissipated and thereby attenuated into the hardware component 35. The housing of hardware component 35 then further attenuates the shock pulse before the final loading is applied to the resonator assemblies as shown in FIG. 3D.

As discussed, while the plan view area real estate within a spacecraft is a critical design limitation, the height of an assembly from a spacecraft surface is rarely a concern for certain kinds of communication equipment hardware (e.g. multiplexers). The typical Ku-Band Input multiplexer 15 and bracket 10 assembly in its conventional mounting position (i.e. channel filters are laid on their side) as shown in FIG. 1, takes up a large portion of floor plan area. Bracket 30 of FIGS. 3A, 3B, 3C and 3D is designed to provide a 30% reduction in plan view area while maintaining positive margins of safety in the presence of random vibration and to ensure that the structural stiffness of the overall assembly provides a minimum natural frequency greater than 100 Hz, the desirability of which is described in detail below.

The natural frequency of a mounted assembly is the frequency at which the assembly will vibrate when subjected to an external excitation. That force can be constant or sudden. This natural frequency depends on the individual characteristics of the assembly such as shape, stiffness and weight. As is conventionally known, assemblies with natural frequencies above 100 Hz have much lower displacements and therefore random vibrations induce lower stresses in such assemblies. However, at high frequencies, the loading induced by pyrotechnic shock events is much higher and can cause failure by exceeding yield allowables, delaminating bondlines, or causing brittle failure of solder joints.

The stress induced by assemblies with natural frequencies below 100 Hz is based on three factors, namely the input environment levels, the total displacement, and the transmissibility. Input levels are dictated by test data and Finite Element Modeling (FEM). Typical spacecraft interfaces (base structures - honeycomb panels) have natural frequencies (i.e. resonances) between 30 Hz and 60 Hz. Therefore, based on the theory of superposition, assemblies with natural frequencies equal to or near the natural frequency of the supporting structure will have high transmissibilities and therefore high displacement responses which significantly increase stress levels. It is therefore beneficial to ensure that the natural frequency of an assembly is well uncoupled from the base structure natural frequency. A fundamental requirement for assembly design for commercial satellites is for the first natural frequency to be greater than approximately 100 Hz since this uncouples the assembly natural frequency from a typical spacecraft natural frequency.

A comparison of various design characteristics (e.g. mass, modal analysis (Hz), random vibration stress margin of safety (%), and shock response stress margin of safety (%) associated with the prior art bracket 10 and hardware component 15 assembly of FIG. 1 and the mounting bracket 30 and hardware component 35 of FIG. 3D, is provided in Table 1 below. The analysis summarized in Table 1 is based on a local coordinate system, as shown in FIGS. 1 and 3D. This local coordinate system is defined as follows and is indicated on FIGS. 1 and 3D:
X-axis: In Plane.
Y-axis: In Plane.
Z-axis: Out of plane.

As is commonly known, the modal analysis of an assembly provides the natural frequency of the assembly in Hertz (Hz). Modal analysis can be accomplished using commercially available software (e.g. SDRC I/DEAS Version 9 manufactured by EDS (SDRC) of Plano, Texas ). Specifically, a Finite Element Model (FEM) is created of the bracket and hardware component assembly that discretizes the assembly into individual elements that are then used to create mass and stiffness matrices based on the material properties of the assembly. Material properties are taken from the conventionally known MIL Handbook 5 (MIL-HDBK-5G, Military Handbook - Metallic Materials and Elements for Aerospace Vehicle Structures, Volumes 1 & 2, Department of Defense, United States of America, 1 November 1994) and where applicable, proprietary design process qualifications. Natural frequencies are calculated using the Lanczos method of eigenvalue extraction which is a conventionally known mathematical method that can be used to estimate the natural frequency of an assembly using the mass and stiffness matrices.

The random vibration stress margin of safety is provided as a percentage (%) value and represents the difference between the predicted analytical random vibration induced stress in the assembly as calculated by the Finite Element Model (FEM) program discussed above and the allowable structural parameter. For random vibration, the allowable of metallic components is taken as the stress value that will cause yielding of a standard bar sample when subjected to a fully reversed stress loading for 100,000 cycles. For bonded components, the allowable is taken as the lower 99^{th} percentile confidence level in a sample size of representative samples pull tested to destruction.

The shock response stress margin of safety is also provided as a percentage (%) value and represents the difference between the predicted analytical shock induced stress in the assembly as calculated by the Finite Element Model (FEM) program discussed above and the allowable yield of the material. For metallic components, the yield values are taken from MIL Handbook 5. The same allowable yield value is used for bonded components as is used for random vibration since the process is variable and the lower 99^{th} percentile confidence level is the best possible allowable value.

**Table 1 -**

| **Design Characteristic Comparison for Ku-Band Input Multiplexer** | | |
|---|---|---|
| **Design Parameter** | **Bracket 10 Assembly (FIG. 1)** | **Bracket 30 Assembly (FIG. 3D)** |
| **Mass(g)**^{**1**} | 171 | 169 |

| **Modal Analysis (Hz)** | | |
|---|---|---|
| X-Axis | 944 | 536 |
| Y-Axis | 520 | 344 |
| Z-Axis | 2000 | 1615 |

| **Random Vibration Stress Margin of Safety (%)** | | |
|---|---|---|
| X-Axis | 5 | 32 |
| Y-Axis | 12 | 12 |
| Z-Axis | 11 | 22 |

| **Shock Response Stress Margin of Safety (%)** | | |
|---|---|---|
| X-Axis | -27² | 80 |
| Y-Axis | -16 ² | 30 |
| Z-Axis | -37 ² | ₃₆ |

| | | |
|---|---|---|
| Notes: 1. The above table assumes that an average mass of Channel Filter assembly used. Due to the design of the assembly, a mass variability is possible up to +- 2%. | | |
| 2. A negative margin based on stress in resonator assembly bondline. | | |

It should be noted that the mass of conventional prior art design (i.e. bracket 10 and hardware component 15 of FIG. 1) is slightly more than the mass of shock attenuating bracket assembly of the present invention (i.e. bracket 30 and hardware component 35 of FIG. 3D). The margin of safety analysis illustrated by Table 1 identifies that the shock loading achieved by design of bracket 30 of the present invention is substantially superior to that of the prior art bracket design. Specifically, bracket 10 is subject to several shock loading failure modes, namely failure of the bondline (due to bonding using a space qualified adhesive and/or brittle ceramic resonating bonding material) and, ultimately failure of the materials and loss of use of the communications device. Also, the thickness of shock attenuating mounting bracket 30 allows for a minimum natural frequency that is greater than 100 Hz. These two factors result in the superior modal performance of bracket 30.

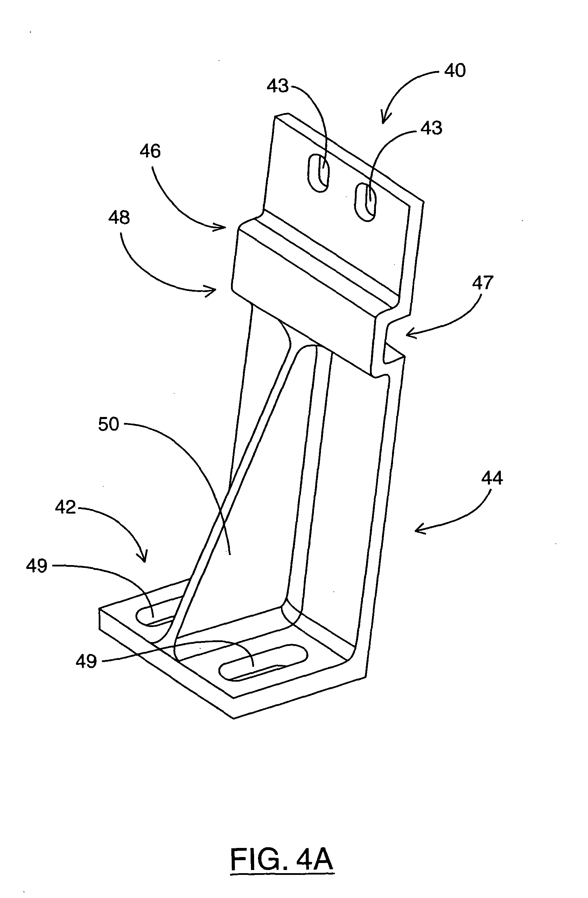

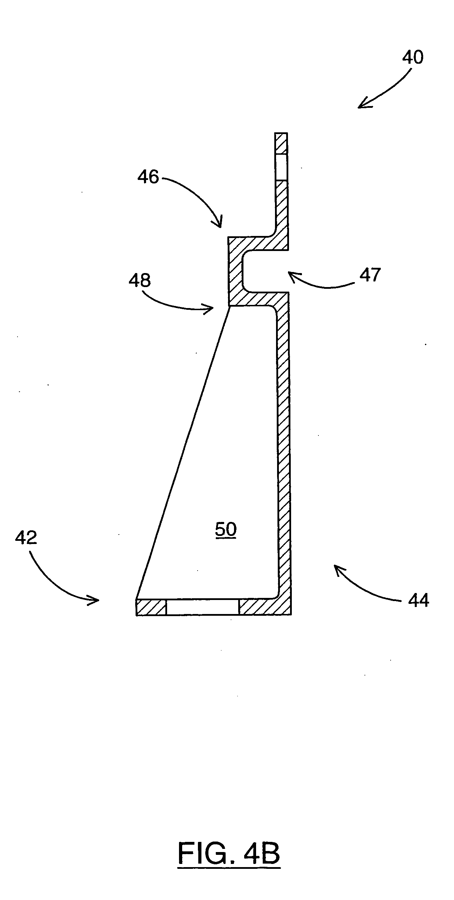

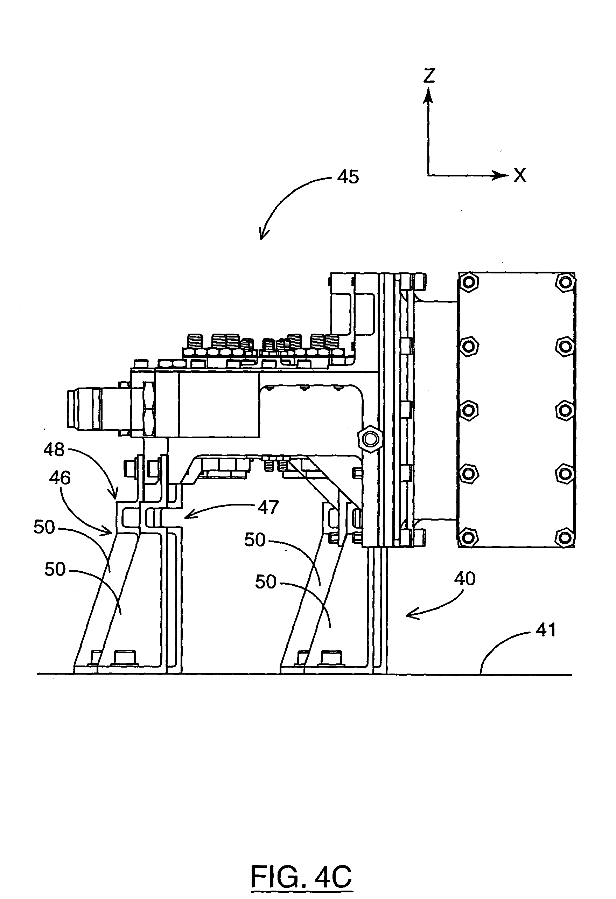

FIGS. 4A, 4B and 4C illustrate another example of a shock attenuating mounting bracket 40 built in accordance with the present invention. Specifically, a mounting bracket 40 is shown, including a base 42, a planar strip 44 and a gusset plate 50. A number of brackets 40 are shown in use, supporting a C-Band dielectric resonator 45 in FIG. 4C. Bracket 40 is preferably manufactured from an aluminum alloy (7075 series alloy) and nickel-plated to provide corrosion protection and scratch resistance. However, it should be understood that the structural elements of bracket 40 may be formed of any suitable materials (e.g. Al 6061-T6, Magnesium, Titanium).

As shown in FIG. 4A and 4C, base 42 is used to secure bracket 40 to a supporting surface 41 as shown. Suitable means, such as screws (not shown) are provided to secure brackets 40 to supporting surface 41 through apertures 49. The outer edges of base 42 extend outward to provide additional stability to bracket 40.

Planar strip 44 extends upward from base 42 in a predominantly upright manner. Planar strip 44 includes a C-shaped notch 47 that results in the formation of two bends 46 and 48. A bolted friction joint 43 is provided within planar strip to which hardware component 45 is coupled using suitable means such as bolts (not shown). The overall geometry of planar strip 44 forces the shock pulse received through base 42 to change direction through the two bends 46 and 48 before reaching hardware component 45. Once the shock pulse is forced to change direction through the bracket 40, the impact energy received from supporting structure 41 is substantially reduced. This effect is similar to that produced by the geometry of the planar strip 34 of mounting bracket 30 (FIG. 3A) although the shock pulse is forced to change direction in a similar manner only in a much smaller space. While C-shaped notch 47 has been described as having two bends 44 and 46, it should be understood that it is contemplated that additional bends be introduced into the geometry of planar strip 44 to further redirect shock pulses deriving from supporting structure 41.

Gusset plate 50 is machined on one side to base 42 and along another side to planar strip 44 using conventional machining techniques. Gusset plate 50 provides rigidity to mounting bracket 40. The thickness of gusset plate 50 is preferably chosen such that the natural frequency of mounting bracket 40 when coupled to C-Band dielectric resonator 45 is greater than 100 Hz.

Accordingly, bracket 40 achieves shock attenuation through the geometry of planar strip 44 which forces the shock pulse received through base 42 to change direction through the two bends 46 and 48 of C-shaped notch 47 before reaching hardware component 45. It is this change in direction through bends 46 and 48 which dissipates the energy of the shock pulse and results in the desired attenuation. The gusset plate 50 is required to provide adequate structural support during random vibration loading by restricting the out of plane deformation of the material in the area of the C-shaped notch 47. Once the shock pulse is forced to change direction through the bracket 40, the impact energy received from supporting structure 41 is substantially reduced.

As above, a comparison of various design characteristics (e.g. mass, modal analysis (Hz), random vibration stress margin of safety (%), and shock response stress margin of safety (%)) associated with the prior art bracket 10 and hardware component 35 assembly of FIG. 2 and the mounting bracket 40 and hardware component 45 of FIG. 4C, is provided in Table 2 below. The analysis summarized in Table 2 is based on a local coordinate system, as shown in FIGS. 2 and 4C. This local coordinate system is defined as follows and is indicated on FIGS. 2 and 4C:
X-axis: In Plane.
Y-axis: In Plane.
Z-axis: Out of plane.

**Table 2 -**

| **Design Characteristic Comparison for C-Band Dielectric Output Multiplexer** | | |
|---|---|---|
| **Design Parameter** | **Bracket 20 Assembly (FIG. 2)** | **Bracket 40 Assembly (FIG. 4C)** |
| Mass (g) ¹ | 6 | 13 |

| Modal Analysis (Hz) | | |
|---|---|---|
| X-Axis | 692 | 308 |
| Y-Axis | 566 | 194 |
| Z-Axis | 1516 | 497 |

| Random Vibration Stress Margin of Safety (%) | | |
|---|---|---|
| X-Axis | 29.3 | 41 |
| Y-Axis | 26.3 | 7 |
| Z-Axis | 33.8 | 12² |

| Shock Response Stress | | |
|---|---|---|
| Margin of Safety (%) | 4 | 12 |
| X-Axis | 37 | 26 |
| Y-Axis | -39 | 11 |
| Z-Axis | | |
| Notes: | | |

| | | |
|---|---|---|
| 1. Mass comparison for actual standard bracket vs. shock attenuating bracket. | | |
| 2. Margin based on stress in resonator assembly bondline. | | |

lt should be noted that the mass of conventional prior art bracket 20 of FIG. 2 is less than the mass of shock attenuating bracket 40 FIG. 4C. However, margin of safety analysis illustrated by Table 2 identifies that the shock loading achieved by the design of bracket 40 of the present invention is substantially superior to that of the design of prior art bracket 20. Specifically, bracket 40 subjects the hardware component 45 to several shock loading failure modes including bondline failure and yielding of metallic components. In contrast, shock attenuating mounting bracket 40 forces the shock pulse to change direction through the two bends 46 and 48 before passing to hardware component 45 thereby reducing stress in hardware component 45 which prevents failures as listed above. Also, the thickness of shock attenuating mounting bracket 40 allows for a minimum natural frequency that is greater than 100 Hz. These two factors result in superior modal performance.

Shock attenuating mounting brackets 30 and 40 are designed to improve the shock attenuation in shock sensitive designs while maintaining sufficient structural stiffness to sustain random vibration loads. Specifically, the geometry of bracket 30 and bracket 40 provides for shock pulse attenuation between the base 32 or 42 and the planar strip portion 34 or 44 which contacts hardware component 35 or 45 by requiring a shock pulse to travel through two bends within the planar strip portion 34 or 44. Modal analysis of brackets 30 and 40 (see Tables 1 and 2) indicates how they exhibit superior performance under both shock and random vibrational conditions than is the case for commonly used bracket designs. Further, as discussed above, brackets 30 and 40 do not impact the overall mass of an assembly. Accordingly, shock attenuating mounting brackets 30 and 40 act as shock isolators, while also providing enough structural support to sustain random vibration loads.

As will be apparent to those skilled in the art, various modifications and adaptations of the structure described above are possible without departing from the present invention, the scope of which is defined in the appended claims.

## Claims

1. A shock attenuating mounting bracket for isolating a hardware component from shocks associated with an underlying structure, said bracket comprising:
(a) a base adapted to be coupled to the underlying structure; and
(b) a planar strip coupled to said base and being adapted to be coupled to said hardware component, said planar strip having at least two bends along its length for dissipating the shocks associated with the underlying structure.

2. The bracket of claim 1, wherein said planar strip is C-shaped and has first and second free ends and a mid-section, such that said first and second free ends are coupled to the base and said mid-section is adapted to be coupled to said hardware component.

3. The bracket of claim 2, wherein each of the two bends within the C-shaped planar strip is positioned between one of said first and second sections on the C-shaped planar strip and the mid-section on the C-shaped planar strip.

4. The bracket of claim 2, wherein each of the two bends within the C-shaped planar strip is formed at substantially a right angle.

5. The bracket of claim 2, wherein the thickness of the C-shaped planar strip is selected to ensure that the minimum natural frequency of the bracket when coupled to the hardware component is greater than 100 Hz.

6. The bracket of claim 1, wherein the two bends of the planar strip are provided by a C-shaped notch formed within the planar strip.

7. The bracket of claim 6, wherein said bracket further includes a multi-sided gusset plate for bracing the planar strip to the base, said gusset plate having one side coupled to said base and an adjoining side coupled to said planar strip below said C-shaped notch.

8. The bracket of claim 7, wherein the planar strip has first and second ends such that said first end is coupled to said base and said second end is coupled to said hardware component, such that said C-shaped notch is positioned between the first end and the second end.

9. The bracket of claim 7, wherein each of the two bends of the C-shaped notch are formed at substantially a right angle.

10. The bracket of claim 1, wherein said planar strip has a cross section sufficiently thick to ensure that the minimum natural frequency of the bracket when coupled to the hardware component is greater than 100 Hz.
